# EUROPÄISCHE PATENTSCHRIFT

(11) **EP 1 794 478 B1**
(45) Veröffentlichungstag und Bekanntmachung des Hinweises auf die Patenterteilung: **13.02.2008**
(21) Anmeldenummer: 05775007.7
(22) Anmeldetag: 15.07.2005
(51) Int. Cl.: F16H 61/04

(54) **VERFAHREN ZUR ERWEITERUNG DER FUNKTION EINER GETRIEBEBREMSE**
METHOD FOR BROADENING THE FUNCTION OF A TRANSMISSION BRAKE
PROCEDE POUR ELARGIR DES FONCTIONS D'UN FREIN D'ENGRENAGE

(30) Priorität: 22.09.2004 DE 102004045828
(43) Veröffentlichungstag der Anmeldung: 13.06.2007
(73) Patentinhaber: ZF FRIEDRICHSHAFEN AG, 88038 Friedrichshafen (DE)
(72) Erfinder: PETZOLD, Rainer, 88045 Friedrichshafen (DE); STEINBORN, Mario, 88046 Friedrichshafen (DE); REITH, Ulrich, 88281 Schlier (DE); KRAMER, Rupert, 88048 Friedrichshafen (DE); GRÖNER, Wolfgang, 88048 Friedrichshafen (DE)
(74) Vertreter: Zietlow, Karl-Peter
(86) Internationale Anmeldenummer: PCT/EP2005/007696
(87) Internationale Veröffentlichungsnummer: WO 2006/032317

(56) Entgegenhaltungen:
- EP-A- 0 686 789
- EP-A- 1 262 360
- EP-A- 1 266 788
- EP-A- 1 273 831
- DE-A1- 10 305 254
- DE-A1- 10 328 019
- DE-A1- 19 652 916
- US-A- 3 667 309
- US-A- 6 022 295
- US-A1- 2004 224 821

## Beschreibung

Die Erfindung betrifft ein Verfahren zur Erweiterung der Funktion einer Getriebebremse in einem Schaltgetriebe gemäß dem Oberbegriff des Patentanspruchs 1. Ein gattungsgemäßes Verfahren ist aus EP-A-1273831 bekannt.

Schaltgetriebe werden seit geraumer Zeit in unterschiedlichen Kraftfahrzeugtypen genutzt. Die vorherrschende Bauweise ist dabei die sogenannte Vorgelegebauweise, bei der das Drehmoment einer Eingangswelle des Getriebes auf eine Vorgelegewelle und von dort auf eine Ausgangswelle übertragen wird. Auf den Wellen befinden sich dabei eine der Anzahl der Gänge entsprechende Anzahl von Zahnradzügen. Jeder Zahnradzug besitzt dabei zumindest ein Losrad, welches drehbeweglich auf einer Welle gelagert ist und so den gleichzeitigen Eingriff der Zahnradzüge unterschiedlicher Übersetzungen ermöglicht. Bei eingelegtem Gang wird das Losrad des Zahnradzuges des entsprechenden Ganges durch eine Koppelvorrichtung drehfest mit der jeweiligen Welle verbunden, und damit ein Momentenfluss von der Eingangswelle über die Vorgelegewelle auf die Abtriebswelle ermöglicht.

Um bei geringem Bauvolumen und geringen Bauteilkosten eine Übertragung hoher Drehmomente zu ermöglichen, werden fast ausschließlich formschlüssige Koppelvorrichtungen bzw. Kupplungen verwendet. Um das Getriebe schnell, stoßfrei, geräusch- und verschleißarm zu schalten, ist beim Einlegen eines Ganges sicherzustellen, dass die durch die formschlüssige Koppelvorrichtung drehfest miteinander zu verbindenden Teile zumindest mit annähernd gleicher Drehgeschwindigkeit drehen. Für diese Synchronisation können klein dimensionierte Reibkupplungen innerhalb des Getriebes verwendet werden, wobei zumeist je Getriebezug eine eigene Kupplung zur Synchronisation vorgesehen ist.

Der Aufwand und die Anzahl der Getriebebauteile kann jedoch dadurch verringert werden, dass die Synchronisation durch ein entsprechendes Einstellen des Verhältnisses der Antriebsdrehzahl zur Abtriebsdrehzahl des Getriebes erfolgt. Da die Abtriebswelle des Getriebes in der Regel ständig mit den angetriebenen Rädern des Fahrzeugs in Antriebsverbindung steht, ist deren Drehgeschwindigkeit durch die Fahrgeschwindigkeit des Fahrzeugs bedingt. Deshalb erfolgt die Synchronisation üblicherweise durch eine entsprechende Anpassung der Drehgeschwindigkeit der Eingangsseite des Getriebes. Für den Fall einer notwendigen Beschleunigung einer Welle, beispielsweise bei einem Rückschaltvorgang, geschieht dies mit Hilfe des Antriebsmotors und der Fahrkupplung des Fahrzeugs. Für eine notwendige Abbremsung einer Welle ist eine Getriebebremse vorgesehen, die zumeist im antriebsseitigen Teil des Antriebsstrangs innerhalb des Getriebegehäuses oder unmittelbar an das Getriebe angrenzend angeordnet ist und zum Beispiel auf die Vorgelegewelle wirkt. Der Getriebebremse kommt dabei die Aufgabe zu, bei Hochschaltvorgängen die Eingangsseite des Getriebes annähernd auf die Synchronisationsdrehzahl abzubremsen.

Im folgenden ist, sofern nicht ausdrücklich anders bezeichnet, mit Kupplung stets eine Kupplung im Inneren des Getriebes gemeint, die eine Drehmomentübertragung zwischen einer Welle und einem Losrad ermöglicht und zumeist, aber nicht notwendiger Weise, eine formschlüssige Kupplung ist. Im Gegensatz dazu wird die Kupplung, welche die Drehmomentübertragung zwischen Antriebsmotor und Getriebe bewirkt, und bei manuell zu schaltenden Fahrzeugen gewöhnlich über ein Kupplungspedal betätigt wird, als Fahrkupplung bezeichnet.

Die Getriebebremse kann hydraulisch, pneumatisch oder elektromagnetisch betätigt werden. Obwohl eine ungeregelte Getriebebremse in einigen Fällen ausreichend sein kann, bietet eine Getriebebremse mit einstellbarer Bremskraft in der Praxis erhebliche Vorteile. Eine solche Getriebebremse lässt sich beispielsweise als pneumatisch durch zwei Zweiwegeventile betätigte Bremse konstruieren, die über eine feste Übersetzung mit der Vorgelegewelle verbunden ist.

Wenngleich eine Synchronisation mittels einer Getriebebremse einfach für automatisierte Schaltgetriebe für Kraftfahrzeuge implementierbar ist, kann das Funktionsprinzip der synchronisierenden Getriebebremse auch auf manuell zu schaltende Getriebe sowie auf Getriebe angewendet werden, welche nicht in Kraftfahrzeugen eingesetzt werden.

Eine Getriebebremse ist aus der DE 196 52 916 A1 bekannt. Hier wird aus einer ermittelten Abtriebsdrehzahl des Getriebes und der Kenntnis der vorgewählten Übersetzung eine Sollanschlussdrehzahl ermittelt und für den Fall, dass die Sollanschlussdrehzahl niedriger ist, als die erfasste Ist-Drehzahl, ein Sollbremsgradient ermittelt und über Ventile eingestellt. Nachdem die Vorgelegewelle durch die Bremswirkung der Getriebebremse die Sollanschlussdrehzahl erreicht hat, wird der Gang eingelegt und die Bremse geöffnet. Diese Lösung ist geeignet, um die Synchronisation üblicher Schaltvorgänge zu regeln, beschränkt sich jedoch in bezug auf die Regelung auf die minimal notwendige Grundfunktion und schöpft die technischen Möglichkeiten einer derartigen Bremse bei weitem nicht aus.

Vor diesem Hintergrund liegt der Erfindung die Aufgabe zugrunde, ein Steuerungsverfahren bzw. Regelungsverfahren für eine Getriebebremse vorzustellen, mit dem ohne nennenswerten zusätzlichen Hardwareaufwand die Funktion dieser Bremse wesentlich erweitert wird. Zur sprachlichen Vereinfachung soll im Folgenden der Begriff "Steuerung" den Begriff "Regelung" mit umfassen. Ob im Einzelnen eine Steuerung oder ein Regelung vorliegt, ergibt sich aus dem Kontext oder ist bei der konkreten Ausgestaltung einer derartigen Steuerung festzulegen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass durch eine Erweiterung des Funktionsumfanges der Getriebebremse ohne eine nennenswerte Erhöhung des Hardwareaufwandes der Komfort und die Geschwindigkeit der Schaltvorgänge, der Schutz vor bzw. die Erkennung von Fehlerzuständen in Sensoren, Kupplung, Fahrkupplung und Motorsteuerung und die Vermeidung unerwünschter Zustände des Getriebes erheblich verbessert werden kann. Zudem ist die Berücksichtigung und die nutzbringende Beeinflussung von bisher nicht berücksichtigten Nebenbedingungen, wie etwa bei dem Betrieb von Nebenaggregaten möglich.

Demnach geht die Erfindung von einem Verfahren zur Steuerung und Regelung einer Getriebebremse in einem Schaltgetriebe aus, welches zur Synchronisation ausgehend von einer Ist-Drehzahl einer Getriebewelle eine Soll-Drehzahl einer zu synchronisierenden Welle ermittelt und eine Getriebebremse so steuert und/oder regelt, dass sich die ermittelte Soll-Drehzahl an der zu synchronisierenden Welle einstellt. Zur Lösung der gestellten Aufgabe sieht die Erfindung zudem vor, dass die Steuerung der Getriebebremse über die reine Getrieb.esynchronisation hinausgehend dazu verwendet wird, um zusätzliche antriebsstrangrelevante Funktionen durchzuführen.

Diese antriebsstrangreievanten Zusatzfunktionen sind in den Unteransprüchen im einzelnen bezeichnet. Ihnen ist gemeinsam, dass diese ohne oder nur mit minimalem zusätzlichen Hardwareaufwand auskommen und daher nahezu kostenneutral zu implementieren sind, den Funktionsumfang und damit den praktischen Wert der Getriebebremse jedoch beträchtlich erhöhen.

In einer ersten Ausgestaltungsform sieht die Erfindung vor, dass Drehmomente, die durch die Trägheitsmassen von mit dem Getriebe verbundenen Nebenabtrieben bedingt sind, bei der Steuerung und/oder Regelung des Bremsmomentes berücksichtigt werden, und dass Nebenabtriebe bei geschlossener Kupplung durch die Getriebebremse abgebremst werden. Unter Nebenabtrieben werden hier Getriebeausgangswellen verstanden, die zusätzlich zu den üblichen, auf die mit Antriebsrädern des Fahrzeugs wirkenden Fahrgängen, den Betrieb von Aggregaten oder Geräten durch den Antriebsmotor des Fahrzeugs ermöglichen. Die Aggregate oder Geräte können dabei zum Betrieb bei Stillstand des Fahrzeugs oder während des Fahrbetriebs vorgesehen sein.

An das Getriebe gekoppelte Nebenabtriebe bzw. die mit den Nebenabtrieben verbundenen Aggregate oder Geräte können je nach Art und Betriebsbedingungen erhebliche rotierende Massen aufweisen, die bei einer Ankupplung an die Abtriebsseite des Getriebes bei geöffneter Fahrkupplung nur langsam auslaufen und dabei die Drehzahl auf der Abtriebsseite des Getriebes über eine längere Zeitdauer auf einem relativ hohen Niveau halten.

Es ist aus Sicherheitserwägungen heraus wünschenswert, durch Steuerungsverfahren eine Möglichkeit zu schaffen, diese Nebenabtriebe abzubremsen und damit die Nachlaufzeit erheblich zu verringern. Der Einbau einer eigenen Bremse für jeden Nebenabtrieb oder in jedem anzutreibenden Aggregat oder Gerät einzig zu diesem Zweck ist jedoch aufwändig und teuer. Erfindungsgemäß kann die ohnehin vorhandene Getriebebremse diese Funktion ohne zusätzliche Bauteilekosten mit übernehmen, indem bei einem Abstellvorgang des Nebenabtriebs zunächst nur die Fahrkupplung geöffnet und damit die Verbindung zum Antriebsmotor getrennt wird. Der auslaufende Nebenabtrieb dreht nun die betroffenen Getriebeteile und kann über die Getriebebremse abgebremst werden. Natürlich ist es auch weiterhin wahlweise möglich, die Kupplung zum Einkuppeln des Nebenabtriebs in den Momentenfluss zu öffnen und den Nebenabtrieb ungebremst auslaufen zu lassen.

Eine weitere Anwendung dieses Verfahrens zur Abbremsung von Nebenabtrieben ergibt sich daraus, dass Nebenabtriebe mit geringer Drehzahl oder im Stillstand nur dann ohne eine aufwändige eigene Reibkupplung durch formschlüssige Kupplungen in den Momentenfluss des Getriebes eingekuppelt werden können, wenn die zu synchronisierende Welle zumindest annähernd die Synchrondrehzahl aufweist, in diesem Fall also nahezu stillsteht. Sofern bereits ein Nebenabtrieb vom Getriebe angetrieben wird und auch weiterhin betrieben werden soll, müsste nach dem Öffnen der Fahrkupplung und damit nach Abkopplung des Fahrzeugantriebs so lange mit dem Einkuppeln des zweiten Nebenabtriebs gewartet werden, bis der erste Nebenantrieb zumindest nahezu ausgelaufen ist und damit auch die zu synchronisierende Welle fast steht. Dies kann je nach Drehzahl und rotierender Masse des Nebenantriebs eine beträchtliche Zeit dauern. Diese Zeit kann durch das erfindungsgemäße Verfahren erheblich verkürzt werden, indem die Getriebebremse bei geschlossener Kupplung zwischen dem Getriebe und dem bereits eingekuppelten Nebenantrieb und bei geöffneter Fahrkupplung dazu verwendet wird, neben der zu synchronisierenden Welle auch den Nebenabtrieb abzubremsen.

Weiter ist es denkbar, dass das Fahrzeug bei eingekuppeltem Nebenantrieb fahrbar sein soll. Ist im Getriebe eine gemeinsame Vorgelegewelle vorhanden, auf welcher einerseits die Losräder angeordnet sind, welche Teile der Zahnradzüge der Fahrgänge bilden, und weiter ein oder mehrere Losräder vorgesehen sind, welche mit Zahnrädern auf gesonderten Abtriebswellen für die Nebenantriebe kämmen, so muss zum Wechsel in einen höheren Fahrgang die Vorgelegewelle wie sonst auch bis auf annähernd die Synchrondrehzahl abgebremst werden. Da in diesem Fall aber durch den sich aufgrund seiner trägen Rotationsmasse weiter drehenden Nebenabtrieb die Drehzahl der Vorgelegewelle vorübergehend auf annähernd dem bisherigen Niveau gehalten wird, kann die Synchronisation ohne eine besondere Berücksichtigung des Nebenabtriebs eine lange Zeit in Anspruch nehmen.

Erfindungsgemäß wird daher bei eingekuppeltem Nebenabtrieb das durch die Getriebebremse aufgebrachte Bremsmoment gegenüber dem Bremsmoment eines reinen Fahrbetriebs ohne eingekuppelten Nebenabtrieb erhöht, um den Nebenabtrieb in kurzer Zeit so abzubremsen, dass sich an der Vorlegewelle die neue Synchrondrehzahl einstellt. Dabei können feste Bremsmomentzuschläge für bestimmte Nebenabtriebe verwendet werden, der Bremsmomentzuschlag in Abhängigkeit von der Art des Nebenantriebs und seiner Drehgeschwindigkeit aus einer Tabelle ausgelesen werden, in Abhängigkeit von der Reaktion der Drehzahl der Vorlegewelle geregelt werden oder es können beliebige andere Steuerungs- oder Regelungsverfahren zur Anwendung kommen, die das Bremsmoment der Getriebebremse bei angekuppeltem Nebenabtrieb gezielt erhöhen.

In einer zweiten Ausgestaltung des erfindungsgemäßen Verfahrens wird die zur Synchronisation des Getriebes verwendete Getriebebremse in einem besonderen Modus zum Sichern eines Fahrzeuges gegen unbeabsichtigtes Wegrollen verwendet.

Es sind eine Vielzahl von Verfahren und Vorrichtungen bekannt, um ein unbeabsichtigtes Rollen eines stehenden Fahrzeuges ohne Zutun des Fahrers zu verhindern. Sie arbeiten zumeist mit einer automatischen Ansteuerung der Betriebsbremse oder der Feststellbremse. Während Systeme, welche auf die Feststellbremse wirken, zumeist nur für diesen Zweck verwendete Aktuatoren benötigen, die das Fahrzeug verteuern und das Fahrzeuggewicht erhöhen, sind die benötigten Aktuatoren bei Systemen, welche auf die Betriebsbremse wirken bei modernen Fahrzeugen durchweg ohnehin vorhanden.

Grundsätzlich ist es jedoch nicht erstrebenswert, die Komplexität eines hoch sicherheitsrelevanten Systems wie der Bremssteuerung durch zusätzliche Funktionen zu erhöhen. Diese Nachteile werden durch eine Verwendung der Getriebebremse zur Sicherung des Fahrzeugs gegen Wegrollen vermieden. Da die Getriebebremse lediglich das Losrollen eines stehenden Fahrzeugs verhindern soll, kann eine relativ kleine Bremse genutzt werden, so dass die Getriebebremse diese Funktion in vielen Fällen ohne eine vergrößerte Dimensionierung und insbesondere ohne dass etwa weitere Bremskolbenabschnitte oder gesonderte, nur für diesen Zweck vorgesehene Vorrichtungen erforderlich sind, mit übernehmen kann. Dies gilt um so mehr, als durch die Getriebeübersetzung und auch vorgelagerte Übersetzungen z.B. eines Achsgetriebes oder eines Verteilergetriebes das zum Halten des Fahrzeugs notwendige Moment stark herabgesetzt werden kann.

Selbst wenn das von der Getriebebremse aufbringbare Bremsmoment ohne eine verstärkte Dimensionierung derselben nicht ausreichen sollte, das Fahrzeug an einer starken Steigung zu halten, kann die erfindungsgemäße Wegrollsperre dennoch in der überwiegenden Anzahl der Betriebsfälle eines Fahrzeuges nutzbringend eingesetzt werden. Während es sehr unwahrscheinlich ist, dass ein Fahrer an einer starken Steigung anhält, ohne mit einem Wegrollen des Fahrzeugs zu rechnen und dem durch manuelle Betätigung einer Bremse entgegenzuwirken, führen kaum merkliche Gefälle oder auch nur Fahrbahnunebenheiten z.B. vor Ampeln häufig zum unbeabsichtigten Rollen des Fahrzeugs. Auch die notwendige Sicherung eines Busses an Haltestellen benötigt keine großen Bremskräfte, sodass die Getriebebremse diese Aufgabe leicht übernehmen kann.

Bei Bedarf kann selbstverständlich auch die Getriebebremse verstärkt ausgelegt sein, um die Funktion der Wegrollsperre noch besser erfüllen zu können. Diese Verstärkung der Auslegung kann dabei auch anderen der hier beschriebenen Funktionen zu gute kommen.

In einer besonderen Weiterführung dieser Funktion zur Sicherung eines Fahrzeugs gegen unbeabsichtigtes Wegrollen kann eine Rausschaukel-Funktion für das Fahrzeug realisiert werden. Hat sich ein Fahrzeug in einer Bodenvertiefung festgefahren, so kann es häufig aus eigener Kraft befreit werden, indem systematisch abwechselnd ein Stück vor- und zurückgefahren wird, sowie das Fahrzeug dabei jeweils die bisher gewonnene Lageenergie mit nutzt, um zusammen mit der vom Motor auf die Räder übertragenen Antriebsenergie auf der jeweils anderen Seite der Mulde ein wenig höher zum stehen zu kommen, bis das Rad schließlich über den Rand der Mulde hinausgelangt. Hierfür ist es wichtig, möglichst wenig der bisher erreichten Höhe des Rades durch zurückrollen in die Mulde zu verlieren, während der Fahrer zwischen Vorwärtsgang und Rückwärtsgang wechselt. Andererseits soll die Bremse vollständig gelöst sein, wenn der Fahrer bei eingelegten Vorwärts- oder Rückwärtsgang die nächste Schaukelbewegung einleitet. Eine Wegrollsicherung, welche über die Feststell- oder Betriebsbremse wirkt, kann diese Funktion allenfalls mit einem erheblichen Regelungsaufwand zufriedenstellend lösen, während eine Getriebebremse mit minimalem Aufwand so gesteuert werden kann, dass ein Zurückrollen genau dann verhindert wird, wenn der jeweils als nächstes einzulegende Gang noch nicht eingekuppelt ist, während die Bremse bei eingekuppeltem Gang sofort vollständig gelöst wird.

Eine dritte Ausgestaltung des erfindungsgemäßen Verfahrens sieht vor, dass ein durch die Fahrkupplung in das Getriebe eingebrachtes Drehmoment durch eine Ansteuerung der Getriebebremse ganz oder teilweise kompensiert wird. Dies kann insbesondere sinnvoll sein, um beispielsweise bei Anfahrvorgängen zunächst das am Getriebe anliegende Moment so weit zu steigern, dass ein Zurückrollen des Fahrzeugs bei einem Anfahrvorgang am Hang ausgeschlossen wird. Auch wenn das durch die Fahrkupplung eingestellte Ist-Drehmoment das Soll-Drehmoment überschreitet, kann dies durch ein entsprechendes Bremsmoment der Getriebebremse kompensiert werden. Dabei kann für den Fall, dass das durch die Fahrkupplung übertragene Moment verringert werden soll, die Getriebebremse das an der Abtriebswelle des Getriebes anliegende Moment so lange reduzieren, bis die Fahrkupplung entsprechend positioniert wurde. Dies ermöglicht eine langsamere und damit genauere Positionierung der Kupplung bei gleichzeitig schneller Realisierung des an der Abtriebsseite des Getriebes gewünschten Drehmomentes. Eine weitere nutzbringende Anwendungen eines derartigen Verfahrens wird nachstehend erläutert.

Bei Einkuppelvorgängen kann es insbesondere bei einer angestrebten schnellen Positionierung der Fahrkupplung zu sogenannten Überschwingern kommen. Diese können beispielsweise durch eine geringfügige Fortsetzung der Bewegung der Kupplungsteile bedingt sein, nachdem die Sollposition erreicht wurde. Je größer die Betätigungsgeschwindigkeit der Fahrkupplung ist, desto eher neigt diese zum Überschwingen. Weiterhin können beispielsweise durch den schnellen Lastwechsel und eine dadurch bedingte elastische Verformung von Teilen des Antriebsstranges unerwünschte Momentspitzen an der Getriebeeingangswelle hervorgerufen werden, die hier ebenfalls unter dem Begriff des Überschwingens subsummiert werden. Da es sich hierbei um sehr kurzfristige Prozesse handelt, ist eine Regelung durch beispielsweise eine Steuerung der Motordrehzahl zu träge und daher nicht sinnvoll.

Durch eine vierte Ausgestaltung der Erfindung wird eine Überschwingung und die damit einhergehende kurzfristige Erhöhung eines an der Getriebeeingangswelle anliegenden Drehmomentes durch eine entsprechende Ansteuerung der Getriebebremse ganz oder teilweise kompensiert. Dabei kann das Überschwingen durch Sensoren erfasst werden. Häufig wird es jedoch möglich sein, die für die Insassen des Fahrzeugs spürbaren Folgen der Überschwingung durch einfache Steuerungsvorgaben für die Getriebekupplung zumindest weitgehend zu verringern. Es kann beispielsweise vorgesehen sein, dass ab einer bestimmten Positioniergeschwindigkeit der Fahrkupplung zu einem festgelegten Zeitpunkt nach beginnender oder vollständiger Kraftübertragung durch die Fahrkupplung durch die Getriebebremse ein kurzer Bremsimpuls vorbestimmter Stärke erzeugt wird. Selbstverständlich sind umfangreichere Steuerungs- und Regelungsverfahren denkbar, die z.B. verschiedene Einkuppelfälle unterscheiden und ggf. unter Einbeziehung weiterer Parameter den Zeitpunkt, die Zeitdauer und die Stärke des Bremsimpulses der Getriebebremse bestimmen. Dies kann durch Auslesen von in Tabellen abgelegten Werten oder auch durch Berechnungen in einem diesbezüglichen Steuerungscomputer erfolgen.

Insbesondere bei Klauengetrieben, aber auch bei anderen Getriebebauarten, können Situationen vorkommen, bei denen jeweils zwei Klauen oder allgemein zwei Getriebebauteile so zueinander stehen, dass ein Einkuppeln mit der üblichen Momentübertragungsfähigkeit nicht möglich ist, da jeweils erhabene Teile sich gegenüberstehen und ein formschlüssiges Einkuppeln verhindert wird. Das Getriebe ist dann nicht schaltbar.

Solche Zahn-auf-Zahn-Stellungen des Getriebes können in einer fünften Ausgestaltung des erfindungsgemäßen Verfahrens durch das Aufbringen eines stetigen oder pulsierenden Bremsmomentes durch die Getriebebremse aufgelöst werden. Im Gegensatz zu Verfahren zur Auflösung solcher Stellungen, die zunächst die an einander anliegenden Kupplungsteile wieder trennen und in einem neuen Kupplungsvorgang auf eine zufällig günstigere relative Position der Kupplungselemente angewiesen sind, kann die Zahn-auf-Zahn-Stellung durch dieses Verfahren schnell und zuverlässig beseitigt werden, ohne die Kupplungselemente zunächst trennen zu müssen. Die Auflösung dieser Zahn-auf-Zahn-Stellungen kann daher besonders schnell und sicher sowie für den Fahrzeuginsassen unmerkbar realisiert werden. Selbstverständlich ist es auch möglich, den Druck der an einander anliegenden Kupplungselemente zunächst zu verringern oder die Kupplung zunächst wieder zu trennen, um beispielsweise den Verschleiß der Kupplungsteile zu minimieren. Auch in diesem Fall kann durch die Aufbringung eines Bremsmomentes durch die Getriebebremse zuverlässig eine geringe Differenzdrehzahl eingestellt werden, sodass bei einem erneuten Einkuppeln eine Wiederholung der Zahn-auf-Zahn-Stellung nahezu ausgeschlossen ist.

Eine sechste Ausgestaltung des erfindungsgemäßen Verfahrens sieht vor, das Kupplungswegsignal der Fahrkupplung durch gezielte Steuerung der Getriebebremse auf Plausibilität zu überprüfen und/oder zu kalibrieren. Dies kann bedeutsam sein, um beispielsweise bei Sensoren, welche durch wechselnde Magnetfelder beeinflussbar sind, die Sensorwerte auch dann überprüfen bzw. kalibrieren zu können, wenn die Sensorwerte zwar fehlerhaft sind, aber dennoch Werte innerhalb des zulässigen Bereiches liefern.

Hierfür wird das Getriebe in Neutralstellung geschaltet und über die Getriebebremse ein definiertes Bremsmoment eingebracht. Wenn anschließend die Fahrkupplung so positioniert wird, dass das vom Antriebsmotor über die Kupplung in das Getriebe eingebrachte Moment nicht ausreicht, um die Getriebeeingangsdrehzahl gegen die Getriebebremse zu erhöhen, und anschließend die Fahrkupplung so verstellt wird, dass das von der Kupplung übertragene Moment gerade ausreicht, um die Getriebeeingangsdrehzahl zu erhöhen, so ist damit ein definierter Kupplungsweg eingestellt bzw. ermittelbar, der unabhängig von z.B. baubedingten Abweichungen oder Kupplungsverschleiß zur Kalibrierung des Kupplungswegesignals bzw. zu dessen Überprüfung verwendet werden kann.

Ist das Bremsmoment der Getriebebremse bekannt, so entspricht in derjenigen Kupplungsstellung, in der die Getriebeeingangswelle gerade gegen die Bremswirkung von der Kupplung gedreht wird, das von der Kupplung übertragene Moment dem Bremsmoment der Getriebebremse.

Für die Bestimmung desjenigen Kupplungsweges, bei dem das über die Fahrkupplung eingeleitete Moment gerade dem Bremsmoment entspricht, kann in einer Abwandlung des Verfahrens auch ausgehend von einem Getriebe in Neutralstellung, einem eingestellten definierten Bremsmoment der Getriebebremse und einer geschlossenen Fahrkupplung die Kupplung so weit geöffnet werden, dass das vom Antriebsmotor über die Kupplung an das Getriebe übertragene Moment gerade nicht mehr ausreicht, um die Getriebeeingangswelle gegen das Bremsmoment der Getriebebremse zu drehen. Werden beide beschriebene Verfahren ausgeführt, so lässt sich aus der Differenz der ermittelten Werte bzw. Kupplungswege auf die Hysterese der Kupplung schließen.

Sofern an die Genauigkeit der Kalibrierung besondere Anforderungen gestellt werden, können darüber hinaus auch Drehmomentverluste, die sich innerhalb des Getriebes ergeben, bei der Auswertung berücksichtigt werden.

Durch eine einfache Vertauschung von einer unabhängigen Eingangsgröße und einer zu kalibrierenden oder auf Plausibilität zu überwachenden Größe kann in einer siebten Ausgestaltung des erfindungsgemäßen Verfahrens die Getriebebremse durch gezielte Steuerung des durch die Fahrkupplung an die Getriebeeingangswelle zu übertragenen Drehmomentes kalibriert werden, und/oder der Zusammenhang zwischen einem Betätigungssignal der Getriebebremse und dem sich einstellenden Bremsmoment auf Plausibilität überprüft bzw. kalibriert werden.

Dabei wird in analoger Abwandlung zum vorstehend beschriebenen Verfahren in Neutralstellung des Getriebes durch Fahrkupplung und Antriebsmotor ein definiertes Moment in die Eingangswelle des Getriebes eingebracht und der Signalwert bzw. diejenige zugehörige Bremsstellung ermittelt, bei welcher das an der Getriebebremse erzeugte Bremsmoment gerade so groß ist, wie das in die Getriebeeingangswelle eingeleitete Moment. Auch hier kann analog zum vorstehend erläuterten Verfahren die Getriebebremse langsam so weit gelöst werden, bis gerade eine Drehbewegung des Getriebes einsetzt, oder die Getriebebremse zunehmend stärker betätigt werden, bis das Bremsmoment gerade ausreicht, um eine Drehbewegung der Eingangswelle des Getriebes zu unterbinden. Durch Anwendung beider Verfahrensabläufe kann ein Hystereseverhalten ermittelt und durch Berücksichtigung interner Drehmomentverluste des Getriebes die Genauigkeit des Verfahrens gesteigert werden.

Selbstverständlich kann an Stelle der Verringerung oder Erhöhung des Bremsmomentes der Getriebebremse alternativ auch das Bremsmoment der Getriebebremse konstant gehalten werden und die Fahrkupplung zunehmend geöffnet oder geschlossen werden, bis gerade ein beginnendes Durchrutschen der Fahrkupplung bzw. ein Ende des Durchrutschens der Fahrkupplung detektiert wird, sofern diese Kupplungsstellungen mit Hilfe bekannter Kupplungscharakteristik einem bestimmten an das Getriebe übertragenen Drehmoment zugeordnet werden können.

Eine achte Ausgestaltung des erfindungsgemäßen Verfahrens sieht vor, dass ein von einer Motorsteuerung ausgegebenes Motordrehmomentsignal mit Hilfe eines definierten, durch die Getriebebremse aufgebrachten Bremsmomentes auf Plausibilität überprüft und/oder kalibriert werden kann. Bei Neutralstellung des Getriebes und geschlossener Fahrkupplung muss das Motordrehmomentsignal dem durch die Getriebebremse aufgebrachten Bremsmoment entsprechen. Stimmen diese Werte nicht überein, so ist von einem Fehler auszugehen. Bei Bedarf können zusätzliche Momente, die etwa durch Reibung im Getriebe entstehen, berücksichtigt werden.

Eine ähnliche Vorgehensweise kann in einer neunten Ausgestaltung angewendet werden, um durch gezielte Ansteuerung der Getriebebremse zu überprüfen, ob sich das Getriebe in der Neutralstellung befindet. Wenn bei geöffneter Fahrkupplung durch die Getriebebremse ein Bremsmoment angelegt wird, so wird sich die Drehzahl der gebremsten Welle bei eingelegtem Gang vergleichsweise langsam und proportional zur Änderung der Fahrzeuggeschwindigkeit ändern, während die Drehzahländerung in der Neutralstellung des Getriebes sehr viel schneller ablaufen wird, da lediglich einige Getriebeteile und nicht das gesamte Fahrzeug gebremst werden, zum anderen wird die Geschwindigkeitsänderung der gebremsten Getriebewellen nicht proportional zu der Änderung der Fahrgeschwindigkeit des Fahrzeugs erfolgen. Beide Kriterien können einzeln oder in Kombination ausgewertet werden, um festzustellen, ob ein Fahrgang eingelegt ist oder nicht.

Es ist bereits bekannt, für die Ansteuerung einer Getriebebremse die Soll-Drehzahl einer Welle sowie deren Ist-Drehzahl zu bestimmen und den Bremsgradienten in Abhängigkeit von der Differenz zwischen beiden Drehzahlen zu steuern. Eine zehnte Ausgestaltung des erfindungsgemäßen Verfahrens sieht als Verbesserung hierzu vor, dass für die Einstellung eines Drehzahlgradienten neben der Differenzdrehzahl zwischen der Soll- und der Ist-Drehzahl einer gebremsten Welle auch zumindest ein durch die Bauart oder die Betriebsbedingungen der Getriebebremse bedingter Grenzwert, insbesondere ein maximal zulässiger Drehzahlgradient und/oder ein Temperaturgrenzwert berücksichtigt werden. Hierdurch können Bauteile vor Überlastung geschützt und beispielsweise das Bremsmoment in Abhängigkeit vom Verschleißzustand der Getriebebremse, oder der ermittelten oder geschätzten Temperatur der Bremsbeläge begrenzt werden.

Weiter kann die zu bremsende Trägheitsmasse oder die abzubauende Rotationsenergie ermittelt oder abgeschätzt werden und das Bremsmoment in Abhängigkeit von der abzubremsenden Trägheitsmasse und/oder der abzubauenden Rotationsenergie gesteuert oder geregelt werden. Diese elfte Ausgestaltung der Erfindung ist besonders vorteilhaft, wenn sich die trägen Massen der abzubremsenden rotierenden Teile beispielsweise durch unterschiedliche Massen und Durchmesser eingekuppelter Zahnräder oder durch eingekuppelte Zusatzabtriebe stark unterscheiden, da in diesem Fall erst durch eine Berücksichtigung dieser unterschiedlichen Massen bzw. in Verbindung mit der Drehzahl der unterschiedlichen abzubauenden Rotationsenergie ein definierter Drehzahlverlauf einstellen lässt. Insbesondere ist es zweckmäßig, bei größeren rotierenden Massen bzw. dadurch bedingten höheren abzubauenden Energiebeträgen die Bremskraft zu verstärken, um die Schaltzeiten weitgehend unabhängig von den genannten Parametern zu machen.

Ebenso ist es sinnvoll, das Bremsmoment der Getriebebremse in Abhängigkeit von zumindest einem Parameter zu steuern oder zu regeln, der als Vorgabewert für eine gewünschte Schaltgeschwindigkeit oder einen bestimmten Schaltkomfort interpretiert wird. Während es bei automatisierten Schaltgetrieben allgemein üblich ist, zwei oder mehr unterschiedliche Schaltkennfelder zur Auswahl zu stellen, die beispielsweise für eine sportliche Fahrweise mit optimalen Beschleunigungswerten oder für eine ökonomische Fahrweise bei minimiertem Kraftstoffverbrauch optimiert sind, wird der eigentliche Gangwechselvorgang bisher nicht auf die Bedürfnisse oder Erfordernisse unterschiedlicher Fahrweisen oder Fahrbedingungen optimiert.

Durch das erfindungsgemäße Verfahren ist es nach einer zwölften Ausgestaltung möglich, die Geschwindigkeit und den Komfort des Gangwechsels gezielt zu beeinflussen, indem die durch die Bremse eingebrachten Verzögerungswerte variiert werden. So können die Bremsmomente bei einer sportlichen Fahrweise gegenüber einem Normalbetrieb vergrößert und damit kürzere Schaltzeiten realisiert werden. Umgekehrt kann zur Erzielung einer besonders komfortablen, ruckarmen und verschleißarmen Schaltcharakteristik das über die Getriebebremse eingebrachte Bremsmoment gegenüber einem Normalbetrieb verringert werden.

Hierbei ist es unerheblich, wie der Parameter ermittelt wird, der als Vorgabewert für einen bestimmten Schaltkomfort oder eine gewünschte Schaltgeschwindigkeit verwendet wird. Der Parameter kann beispielsweise vom Fahrer explizit eingegeben werden, er kann automatisch mit einer herkömmlichen manuellen Umschaltung der Schaltcharakteristik umgeschaltet werden, er kann aus Fahrparametern ermittelt oder im Rahmen einer Personalisierung z.B. aus einem im Fahrzeugschlüssel befindlichen Speicher ausgelesen werden. Im einfachsten Fall handelt es sich um die Umschaltung zwischen zwei diskreten Werten. Denkbar ist jedoch auch eine größere Anzahl von diskreten Werten oder auch ein Kontinuum, z.B. in Form eines Schiebereglers. Auch die Berücksichtigung mehrerer Parameter wie beispielsweise der Schalthäufigkeit, von Beschleunigungswerten oder Motorwerten ist vom Umfang dieser Erfindung abgedeckt, solange diese Werte als Zwischenschritt zur Ermittlung eines Parameters angesehen werden können oder jedenfalls im Ergebnis auf eine Einflussgröße auf die Stärke der Getriebebremswirkung zur Erzielung unterschiedlicher Schaltcharakteristika hinauslaufen.

In einer dreizehnten Ausgestaltung der Erfindung erfolgt die Ermittlung des einzustellenden Getriebebremsmoments durch Einbeziehung der bekannten Trägheitsmomente der aktuell zu bremsenden Massen und/oder dem vorhandenen Drehzahlgradienten an der Getriebebremse sowie optional des natürlichen Drehzahlgradienten der zu bremsenden Massen und/oder der Temperatur des Getriebes. Hierdurch ist eine wesentlich exaktere Einstellung des Bremsmomentes in bezug auf Komfort, Schaltgeschwindigkeit, Verschleiß und Geräuschentwicklung möglich, sowie insbesondere die zumindest annähernd gleiche oder gezielt unterschiedliche Schaltcharakteristik beim Schalten verschiedener Gänge realisierbar. Auch können die Schaltvorgänge bei Bedarf besonders verschleißarm gestaltet werden.

Sofern vorstehend ausgeführt wird, dass die Fahrkupplung bei Betätigung einer Getriebebremse geöffnet ist, ist es nach einer vierzehnten Ausgestaltung der Erfindung stets auch möglich, dass die Fahrkupplung zumindest unter Motorbetriebsbedingungen geschlossen wird bzw. bleibt oder mit Schlupf geschlossen wird bzw. bleibt, bei denen der Motor selbst ein Bremsmoment zur Verfügung stellt, und bei denen bei geöffneter Fahrkupplung eine Aktivierung der Getriebebremse erfolgen würde.

Auf diese Weise kann die Getriebebremse entlastet und zusätzlich der Antriebsmotor im sogenannten Schubbetrieb unter Abschaltung der Brennstoffzufuhr betrieben werden. In diesen Fällen erfolgt für die Steuerung des Getriebebremsmomentes sinnvoller Weise eine Ermittlung und entsprechende Berücksichtigung des über die Fahrkupplung in das Getriebe eingebrachten Motorbremsmomentes.

## Patentansprüche

1. Verfahren zur Steuerung und Reglung einer Getriebebremse in einem Schaltgetriebe, welches zur Synchronisation ausgehend von einer Ist-Drehzahl einer Getriebewelle eine Soll-Drehzahl einer zu synchronisierenden Welle ermittelt und eine Getriebebremse derart steuert und/oder regelt, dass sich die ermittelte Soll-Drehzahl an der zu synchronisierenden Welle einstellt, und die Steuerung und Reglung der Getriebebremse über die reine Getriebesynchronisation hinausgehend dazu verwendet wird, um zusätzliche antriebsstrangrelevante Funktionen durchzuführen, **dadurch gekennzeichnet, dass** durch die Trägheitsmassen von mit dem Getriebe verbundenen Nebenaggregaten bedingte Momente bei der Steuerung und/oder Regelung des Bremsmomentes berücksichtigt werden, und dass Nebenabtriebe bei geschlossener Kupplung zwischen einem Getriebelosrad und einer Getriebewelle durch die Getriebebremse abgebremst werden.

2. Verfahren nach Anspruch 1, **dadurch gekennzeichnet, dass** die zur Synchronisation des Getriebes verwendete Getriebebremse in einem besonderen Modus zum Sichern eines Fahrzeuges gegen unbeabsichtigtes Wegrollen verwendet wird.

3. Verfahren nach Anspruch 2, **dadurch gekennzeichnet, dass** die Funktion zur Sichern eines Fahrzeugs gegen unbeabsichtigtes Wegrollen zur Realisierung einer Rausschaukel-Funeon für das Fahrzeug verwendet wird.

4. Verfahren nach einem oder mehreren der vorhergehenden Ansprüche, **dadurch gekennzeichnet, dass** ein durch eine Fahrkupplung zwischen dem Getriebe und einem Fahrzeugantriebsmotor in das Getriebe eingebrachtes Drehmoment durch eine Ansteuerung der Getriebebremse ganz oder teilweise kompensiert wird.

5. Verfahren nach Anspruch 4, **dadurch gekennzeichnet, dass** ein durch ein Überschwingen beim schnellen Schließen der Fahrkupplung bedingtes unerwünscht hohes und durch die Fahrkupplung in das Getriebe eingebrachtes Drehmoment durch ein eingestelltes Bremsmoment der Getriebebremse zumindest teilweise kompensiert wird.

6. Verfahren nach einem oder mehreren der vorhergehenden Ansprüche, **dadurch gekennzeichnet, dass** Zahn-auf-Zahn-Stellungen des Getriebes durch das Aufbringen eines stetigen oder pulsierenden Bremsmomentes durch die Getriebebremse auf eine Getriebewelle beseitigt werden.

7. Verfahren nach einem oder mehreren der vorhergehenden Ansprüche, **dadurch gekennzeichnet, dass** ein Kupplungswegsignal der Fahrkupplung durch gezielte Steuerung oder Regelung der Getriebebremse auf Plausibilität überprüft und/oder kalibriert wird.

8. Verfahren nach einem oder mehreren der vorhergehenden Ansprüche, **dadurch gekennzeichnet, dass** die Getriebebremse durch gezielte Steuerung des durch die Fahrkupplung an die Getriebeeirtgangswelle übertragenen Drehmomentes kalibriert wird, und/oder der Zusammenhang zwischen einem Betätigungssignal der Getriebebremse und dem sich einstellenden Bremsmoment auf Plausibilität überprüft wird.

9. Verfahren nach einem oder mehreren der vorhergehenden Ansprüche, **dadurch gekennzeichnet, dass** ein von einer Motorsteuerung ausgegebenes Motordrehmomentsignal mit Hilfe eines definierten, durch die Getriebebremse aufgebrachten Bremsmomentes auf Plausibilität überprüft und/oder kalibriert wird.

10. Verfahren nach Anspruch 1, **dadurch gekennzeichnet, dass** durch gezielte Ansteuerung der Getriebebremse überprüft wird, ob sich das Getriebe in der Neutralstellung befindet.

11. Verfahren nach einem oder mehreren der vorhergehenden Ansprüche, **dadurch gekennzeichnet, dass** für die Einstellung eines Drehzahlgradienten neben der Differenzdrehzahl zwischen der Soll-Drehzahl und der Ist-Drehzahl einer gebremsten Getriebewelle auch zumindest ein durch die Bauart oder die Betriebsbedingungen der Getriebebremse bedingter Grenzwert, insbesondere ein maximal zulässiger Drehzahlgradient und/oder ein Temperaturgrenzwert, berücksichtigt werden.

12. Verfahren nach einem oder mehreren der vorhergehenden Ansprüche, **dadurch gekennzeichnet, dass** das Bremsmoment in Abhängigkeit von der abzubremsenden Trägheitsmasse und/oder der abzubauenden Rotationsenergie gesteuert oder geregelt wird.

13. Verfahren nach einem oder mehreren der vorhergehenden Ansprüche, **dadurch gekennzeichnet, dass** das Bremsmoment in Abhängigkeit zumindest eines Parameters gesteuert oder geregelt wird, der als Vorgabewert für eine gewünschte Schaltgeschwindigkeit oder einen bestimmten Schaltkomfort interpretiert wird.

14. Verfahren nach einem oder mehreren der vorhergehenden Ansprüche, **dadurch gekennzeichnet, dass** das einzustellende Getriebebremsmoment durch Einbeziehung der bekannten Trägheitsmomente der aktuell zu bremsenden Massen und/oder dem vorhandenen Drehzahlgradienten an der Getriebebremse erfolgt, und optional dazu der natürliche Drehzahlgradient der zu bremsenden Massen und/oder die Temperatur des Getriebes berücksichtigt werden.

15. Verfahren nach einem oder mehreren der vorhergehenden Ansprüche, **dadurch gekennzeichnet, dass** die Fahrkupplung zumindest unter solchen Motorbetriebsbedingungen geschlossen wird bzw. bleibt oder mit Schlupf geschlossen wird bzw. bleibt, bei denen der Motor selbst ein Bremsmoment zur Verfügung stellt (beispielsweise Schubbetrieb) und bei denen bei geöffneter Fahrkupplung eine Aktivierung der Getriebebremse erfolgen würde, wobei das über die Fahrkupplung in das Getriebe eingebrachte Motorbremsmoment bei der Ermittlung des einzustellenden Getriebebremsmomentes berücksichtigt wird.

## Claims

1. The invention relates to a method for the control of a transmission brake in a manual transmission, with a desired speed of a shaft to be synchronized being determined for synchronization on the basis of an actual speed of a transmission shaft and a transmission brake being controlled in such a way that the determined desired speed is generated on the shaft to be synchronized, and with the control of the transmission brake not only being used for pure transmission synchronization but also for additional driveline-relevant functions, **characterized in that** the torques caused by the inertial masses of transmission-linked accessories are taken into account in the control of the brake torque and that, with the clutch closed between a transmission idler gear and a transmission shaft, PTOs are decelerated by the transmission brake.

2. A method according to claim 1, **characterized in that** the transmission brake for transmission synchronization is used in a special mode for the prevention of inadvertent vehicle movement.

3. A method according to claim 2, **characterized in that** the function preventing inadvertent vehicle movement is used for the realization of a freeing-the-vehicle-by-rocking function.

4. A method according to one or several of the preceding claims, **characterized in that** a torque introduced into the transmission by a clutch between the transmission and a vehicle driving motor is fully or partially compensated by actuation of the transmission brake.

5. A method according to claim 4, **characterized in that** an excessively high torque resulting from overshooting during fast closure of the clutch and introduced into the transmission by the clutch is at least partially compensated by a preset brake torque of the transmission brake.

6. A method according to one or several of the preceding claims, **characterized in that** tooth-on-tooth positions of the transmission are eliminated by the transmission brake applying a continuous or pulsating brake torque to a transmission shaft.

7. A method according to one or several of the preceding claims, **characterized in that** a clutch travel signal of the driving clutch is plausibility-checked and/or calibrated through selective control by the transmission brake.

8. A method according to one or several of the preceding claims, **characterized in that** the transmission brake is calibrated through selective control of the torque transmitted to the transmission input shaft by the clutch and/or **in that** the relationship between an actuating signal of the transmission brake and the resulting brake torque is plausibility-checked.

9. A method according to one or several of the preceding claims, **characterized in that** an engine torque signal output from the engine control is plausibility-checked and/or calibrated with the help of a defined brake torque applied by the transmission brake.

10. A method according to claim 1, **characterized in that** neutral position of the transmission is checked by means of selective actuation of the transmission brake.

11. A method according to one or several of the preceding claims, **characterized in that** for adjustment of a speed gradient at least one limit value determined by the type or the operating conditions of the transmission brake, in particular a maximally permitted speed gradient and/or a temperature limit value, is/are taken into account apart from the differential speed between the desired and the actual speed of a decelerated transmission shaft.

12. A method according to one or several of the preceding claims, **characterized in that** the brake torque is controlled dependent on the inertial mass to be decelerated and/or the rotational energy to be reduced.

13. A method according to one or several of the preceding claims, **characterized in that** the brake torque is controlled dependent on at least one parameter, which is interpreted as a set value for a desired shifting speed or a particular shifting comfort.

14. A method according to one or several of the preceding claims, **characterized in that** setting of the transmission brake torque is based on consideration of the known inertia moments of the masses to be decelerated and/or the speed gradient on the transmission brake, with optional additional consideration of the natural speed gradient of the masses to be decelerated and/or the temperature of the transmission.

15. A method according to one or several of the preceding claims, **characterized in that** the clutch is or remains closed or is or remains closed with slip during engine operating conditions with the engine itself providing a brake torque (such as during coasting) and with activation of the transmission brake resulting from an opened clutch, with the engine brake torque introduced into the transmission via the clutch being taken into account for determination of the transmission brake torque to be set.

## Revendications

1. Procédé de pilotage et de réglage d'un frein de boîte d'une boîte de vitesses mécanique, permettant de déterminer, pour la synchronisation d'un arbre de boîte de vitesses à partir d'un régime réel, un régime nominal d'un arbre à synchroniser et pilotant et/ou réglant un frein de boîte de manière à ce que le régime nominal déterminé est appliqué à l'arbre à synchroniser et à ce que le pilotage et le réglage du frein de boîte - outre la synchronisation de la boîte de vitesses - sont utilisés pour exécuter d'autres fonctions pertinentes de la chaîne cinématique, **caractérisé en ce que** lors du pilotage et/ou du réglage du couple de freinage sont pris en considération des couples conditionnés par les masses d'inertie de groupes auxiliaires liés à la boîte de vitesses, et **en ce que** des prises de mouvement sont freinées par le frein de boîte lorsque l'embrayage entre le pignon fou de la boîte de vitesses et un arbre de boîte de vitesses est fermé.

2. Procédé selon la revendication 1, **caractérisé en ce que** le frein de boîte utilisé pour la synchronisation de la boîte de vitesses est utilisé dans un mode spécial pour prévenir le déplacement involontaire d'un véhicule.

3. Procédé selon la revendication 2, **caractérisé en ce que** la fonction de prévention de déplacement involontaire d'un véhicule est utilisé pour la réalisation d'une fonction de dégagement du véhicule.

4. Procédé selon une ou plusieurs des revendications précédentes, **caractérisé en ce que** un couple appliqué dans la boîte de vitesses par un embrayage principal positionné entre la boîte de vitesses et un moteur d'entraînement du véhicule peut être compensé partiellement ou complètement par le pilotage du frein de boîte.

5. Procédé selon la revendication 4, **caractérisé en ce que** un couple appliqué dans la boîte de vitesses par l'embrayage principal étant inopportunément élevé à cause d'un rebondissement lors d'une fermeture rapide de l'embrayage principal peut être compensé au moins partiellement par le couple de freinage réglé dans le frein de boîte.

6. Procédé selon une ou plusieurs des revendications précédentes, **caractérisé en ce que** des positions dent-sur-dent dans la boîte de vitesses sont éliminées par l'application d'un couple de freinage continu ou pulsatoire transmis par le frein de boîte à un arbre de la boîte de vitesses.

7. Procédé selon une ou plusieurs des revendications précédentes, **caractérisé en ce que** par le pilotage ou le réglage ciblés du frein de boîte il est possible d'effectuer un contrôle de plausibilité et/ou un calibrage du signal de la course de la pédale de l'embrayage principal.

8. Procédé selon une ou plusieurs des revendications précédentes, **caractérisé en ce que** il est possible de calibrer le frein de boîte par le pilotage ciblé du couple transmis par l'embrayage principal à l'arbre d'entrée de la boîte de vitesses et/ou de vérifier la plausibilité de la corrélation entre un signal d'actionnement du frein de boîte et le couple de freinage réglé.

9. Procédé selon une ou plusieurs des revendications précédentes, **caractérisé en ce que**, à l'aide d'un couple de freinage défini appliqué par le frein de boîte, il est possible de vérifier la plausibilité d'un signal de couple moteur émis par un calculateur moteur et/ou de le calibrer.

10. Procédé selon la revendication 1, **caractérisé en ce qu'**il est possible de vérifier par un pilotage ciblé du frein de boîte si la boîte de vitesses se trouve en position de point mort.

11. Procédé selon une ou plusieurs des revendications précédentes, **caractérisé en ce que** pour le réglage d'un gradient de régime sont pris en considération - outre le régime différentiel entre le régime nominal et le régime réel d'un arbre de boîte freiné - également au moins une valeur seuil conditionnée par la configuration ou les conditions de fonctionnement du frein de boîte, en particulier un gradient de régime maxi. admissible et/ou une valeur seuil de température.

12. Procédé selon une ou plusieurs des revendications précédentes, **caractérisé en ce que** le couple de freinage est piloté ou réglé en fonction de la masse d'inertie à freiner et/ou de l'énergie de rotation à dissiper.

13. Procédé selon une ou plusieurs des revendications précédentes, **caractérisé en ce que** le couple de freinage est piloté ou réglé en fonction d'au moins un paramètre interprété en tant que valeur de consigne pour une vitesse de changement de vitesses souhaitée ou pour un confort de changement de vitesses déterminé.

14. Procédé selon une ou plusieurs des revendications précédentes, **caractérisé en ce que** le réglage de l'élément de frein de boîte est effectué par la prise en considération des couples d'inertie connus des masses à freiner à un moment donné et/ou par le gradient de régime présent sur le frein de boîte, et **en ce que** - en option - est pris en considération le gradient de régime naturel des masses à freiner et/ou la température de la boîte de vitesses.

15. Procédé selon une ou plusieurs des revendications précédentes, **caractérisé en ce que** l'embrayage principal est fermé ou reste fermé au moins dans de telles conditions de fonctionnement du moteur - ou **en ce qu'**il est fermé ou reste fermé en le laissant patiner - dans lesquelles le moteur lui-même fournit un couple de freinage (par exemple en poussée), et dans lesquelles avec embrayage principal ouvert aurait lieu une activation du frein de boîte, sachant que lors de la détermination du couple du frein de boîte à régler est pris en considération le couple de frein moteur transmis par l'intermédiaire de l'embrayage principal dans la boîte de vitesses.
